# EUROPEAN PATENT SPECIFICATION

(11) **EP 2 106 929 B1**
(45) Date of publication and mention of the grant of the patent: **17.03.2010**
(21) Application number: 08425218.8
(22) Date of filing: 03.04.2008
(51) Int. Cl.: B60B 33/02

(54) **Self-braking castor for transport trolleys**
Selbstbremsende Rolle für Transportwagen
Roulette autofreinée pour chariot de transport

(43) Date of publication of application: 07.10.2009
(73) Proprietor: Cebora S.P.A., 40057 Cadriano Di Granarolo Emilia (IT)
(72) Inventor: Grossi, Giancarlo, 44100 Ferrara (IT)
(74) Representative: Lanzoni, Luciano

(56) References cited:
- EP-A- 0 373 398
- DE-A1- 19 611 902
- GB-A- 1 333 533
- JP-A- 57 138 401
- US-A- 5 787 547

## Description

This invention relates to a self-braking castor.

The invention relates, in particular, to a self-braking castor applicable to sofas, drawers, trolleys and the like.

In the following specification we will refer, in particular, to self-braking swivel castors for shopping trolleys but without thereby restricting the scope of the invention.

As is known, these trolleys are used in shopping centres or other self-service shops.

The user picks products off the shelves and places them in the trolley.

The swivel castors that support the trolley allow the trolley to be steered easily, with a very tight turning radius, so that the user can manoeuvre it without problems along the shop aisles or inside the shopping centre.

Very often, the shopping centres or shops where the trolleys are used are laid out on two or more floors linked by inclined passenger conveyors that enable users to take trolleys with them without effort from one floor to the other.

As is known, inclined passenger conveyors have a plurality of longitudinal parallel grooves.

To enable trolleys to be transported safely on inclined conveyors, the swivel castors which the trolleys run on have locking mechanisms that come into action when the castors are pushed onto the conveyor. The castors remain locked, preventing the trolleys from moving while they are travelling on the inclined conveyor, and are unlocked again when they reach a level floor.

Castors of this kind are described, for example, in patent GB 1 333 533.

These castors normally comprise a main wheel for moving the trolley and an auxiliary locking wheel parallel to the main wheel.

The auxiliary wheel can move vertically relative to the main wheel between a first, running position where the lower portion of the auxiliary wheel and the lower portion of the main wheel are aligned in the same plane, and a stop position where the lower portion of the auxiliary wheel is lower down than the lower portion of the main wheel.

In the stop position, the auxiliary wheel activates the locking mechanism of the main wheel.

The castor also has spring means which urge the auxiliary wheel into the stop position.

When the trolley is on a level floor surface, the auxiliary wheel is held in the running position by the reaction of the floor to the weight of the trolley.

When the trolley is moved onto a conveyor, the auxiliary wheel is no longer subjected to the reaction of the floor and sinks freely into the longitudinal grooves in the conveyor and is pressed into the stop position by the spring means.

Thus, during the period in which the trolley is transported by the conveyor, the trolley castors are locked and the trolley is held securely in place on the conveyor.

When the trolley is pushed off the conveyor, each auxiliary wheel moves out of the respective groove and the level floor applies an upward force on the auxiliary wheel which returns it to the running position.

It is not unusual, especially in the underground car parks of supermarkets, for a floor to present surface irregularities or thermal expansion joints that form grooves between adjacent floor blocks.

When a user is pushing a trolley along the car park floor, it is very likely that one or more of the trolley castors will run close to an expansion joint.

It is therefore easy for the auxiliary wheel to sink into the groove accidentally, thus activating the castor locking mechanism and bringing the trolley to a sudden stop.

This can be very dangerous, especially if the shopping trolley is full: the sudden stopping of the trolley and the inertia created by the trolley load may cause the user's body to collide with the trolley frame, causing injuries that may be very serious if the user pushing the trolley is an elderly person.

This invention therefore has for an aim to overcome the above mentioned disadvantage by providing a self-braking castor which can securely stop the trolley when travelling on an inclined path where it must be held still but which, at the same time, can prevent the trolley from coming to a sudden brief stop when stopping is not wanted.

The technical characteristics of the invention, with reference to the above aims, are clearly described in the claims below and its advantages are apparent from the detailed description which follows, with reference to the accompanying drawings which illustrate a preferred embodiment of the invention provided merely by way of example without restricting the scope of the inventive concept, and in which:
- Figure 1 is a side view, with some parts in cross section, of a castor according to this invention;
- Figure 2 is a section view through the line II-II of Figure 1;
- Figure 3 is a side view, with some parts in cross section, showing a second embodiment of the castor according to the invention.
- Figure 4 is a section view through the line IV-IV of Figure 3;
- Figure 5 is a front view of a detail of the castor according to the invention;
- Figure 6 is a section view through the line VI-VI of Figure 5;
- Figure 7 is a rear view of the detail of Figure 5;
- Figure 8 is a front view of a detail of the castor of Figures 1 and 2;
- Figure 9 is a rear view of the detail of Figure 8;
- Figure 10 is a section view of the castor according to the invention in a second operating position;
- Figure 11 is a section view of the castor according to the invention in a non-operating, intermediate position.

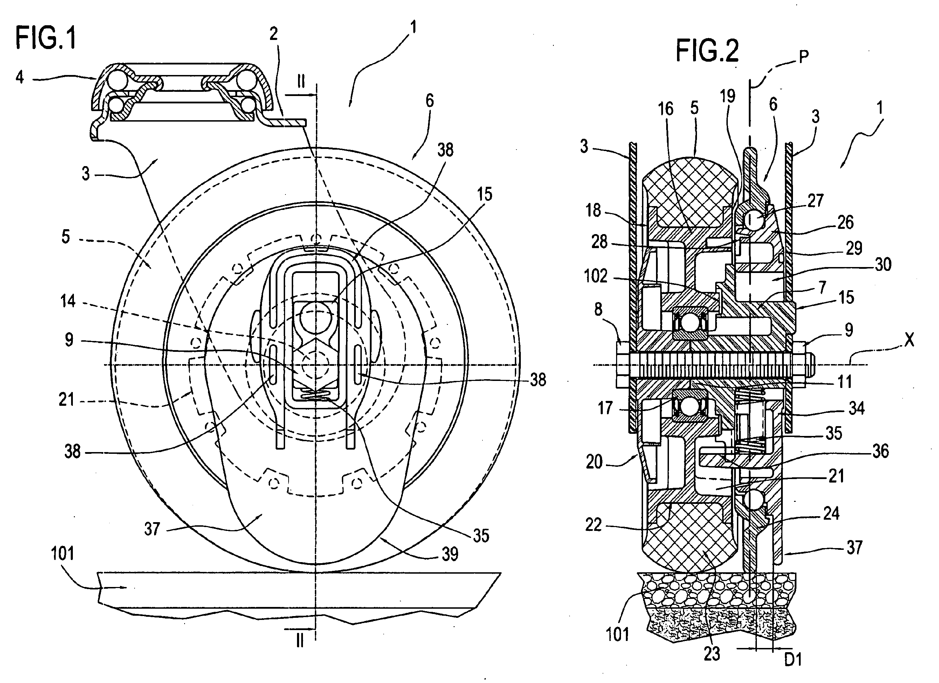

With reference to the accompanying drawings, especially Figure 1, the numeral 1 denotes in its entirety a self-braking castor for transport trolleys, in particular shopping trolleys.

As shown in Figures 1, 2, 3 and 4, the castor 1 is connected to a mounting fork 2 consisting of two lateral arms 3 and having an upper portion 4 that swivels about a vertical axis to enable the trolley mounted on it to turn around very tight corners: this forms a typical swivel castor.

In one form of it, the mounting fork 2 does not have the upper swivelling portion 4, thus forming a fixed trolley castor.

The self-braking castor 1 is mounted between the two arms 3 of the fork and comprises a main wheel 5, an auxiliary wheel 6 mounted substantially beside the main wheel 5, and a hub 7.

The hub 7 is designed to fix the self-braking castor 1 to the arms 3 of the fork 2 and to mutually connect the main wheel 5 and the auxiliary wheel 6 by means of a bolt 8 passing through the main wheel 5, the auxiliary wheel 6 and the hub 7 and fixed to one of the fork arms 3 by a nut 9.

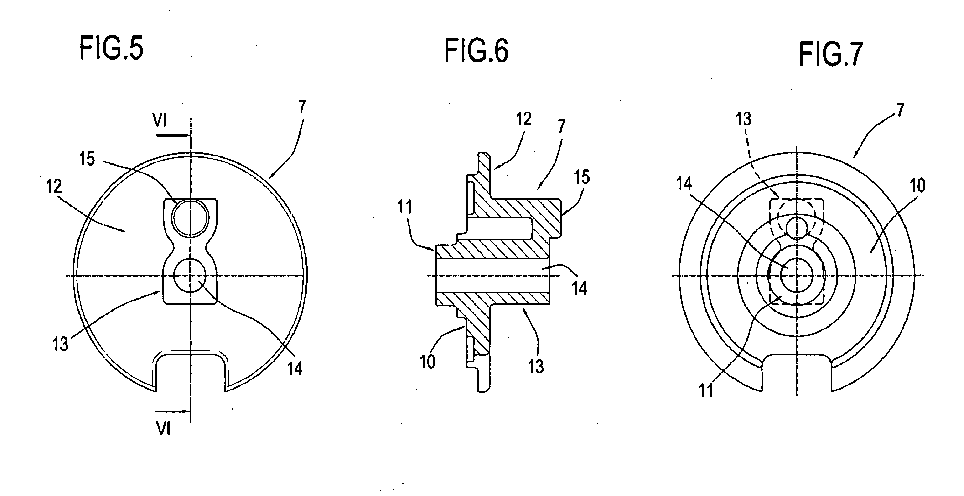

As illustrated in detail in Figures 5, 6 and 7, the hub 7 comprises a first face 10 from which extends a cylindrical protrusion 11 and a second face 12 from which protrudes an element 13 substantially in the shape of a parallelepiped.

The hub 7 has a through hole 14 that passes through a part of the protruding element 13 and cylindrical protrusion 11: the hole 14 defines a passage through the hub 7 into which the bolt 8 is inserted.

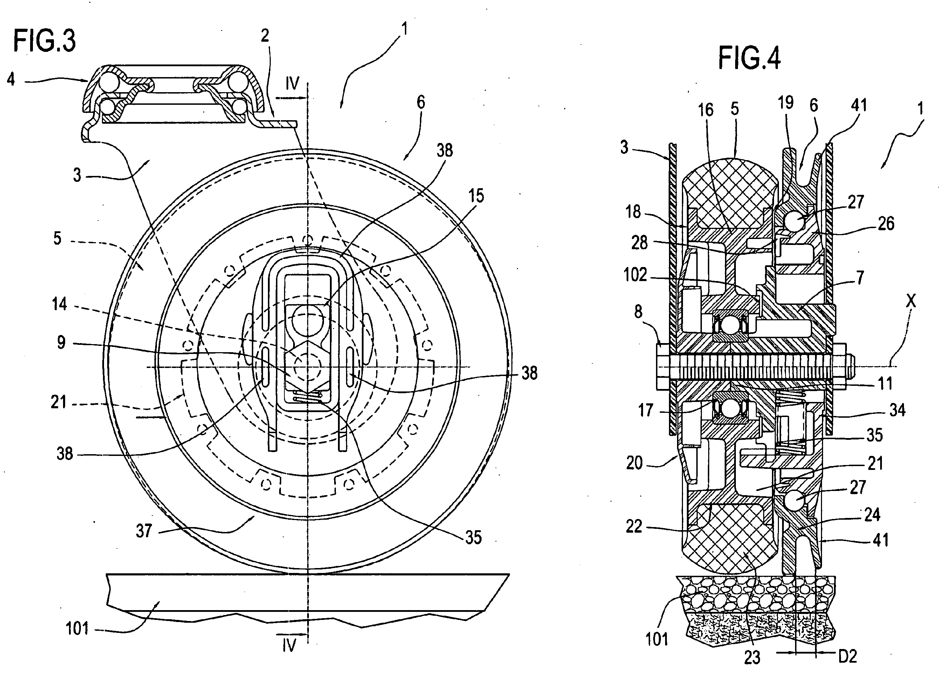

Also extending from the parallelepiped-shaped protruding element 13 is a cylindrical protuberance 15 for fixing the hub 7 to one of the lateral arms 3 of the fork 2 by inserting the protuberance 15 into a matching hole made in the arm 3 of the fork 2, as shown in Figures 2 and 4.

The hub 7 is thus fixed relative to the fork 2 during trolley movement.

As shown in Figures 2 and 4, the main wheel 5 comprises an internal disc 16 keyed to a ball bearing 17, the cylindrical protrusion 11 of the hub 7 being inserted in the ball bearing 17 in such a way as to enable the main wheel 5 to revolve about a defined axis X relative to the hub 7 itself, which is fixed to the fork 2.

The internal disc 16 of the main wheel 5 has an outside face 18 facing a lateral arm 3 of the trolley fork 2 and an inside face 19 facing the auxiliary wheel 6.

The outside face 18 has a plate 20 to make it easier to fix the wheel 5 to the fork 2.

As shown in Figures 1, 2, 3 and 4, the inside face 19 has a plurality of peripheral seats 21 whose purpose is described in detail below.

At its perimetric portion 22, the inside disc 16 of the main wheel 5 has attached to it a ring 23 made of rubbery material forming the tread of the main wheel 5.

Advantageously, as shown in Figures 2 and 4, between the inside face 19 of the internal disc 16 and the hub 7, at the bearing 17, there is a C-shaped channel 102 forming a "labyrinth" that keeps dirt from the top of the disc 16 out of the bearing.

The auxiliary wheel 6 comprises a circular crown 24 which is made of a plastic material, such as polyurethane, and which, since it is designed to brake the main wheel 5, and hence the trolley, must be thin enough to sink into the longitudinal grooves 25 of standard width (6-7 millimetres) of a passenger conveyor 100.

The circular crown 24 is mounted on a central disc 26 with an interposed ball crown ring 27 so that the auxiliary wheel 6 can freely rotate relative to the central disc 26 itself.

As illustrated in Figures 2, 8 and 9, the central disc 26 has an inside face 28 facing the main wheel 5 and an outside face 29 facing a lateral arm 3 of the fork 2.

The central disc 26 has a substantially rectangular slot 30 designed to receive the parallelepiped-shaped.element 13 protruding from the hub 7.

The central disc 26 is therefore free to move vertically relative to the hub 7 and main wheel 5 thanks to the presence of the slot 30.

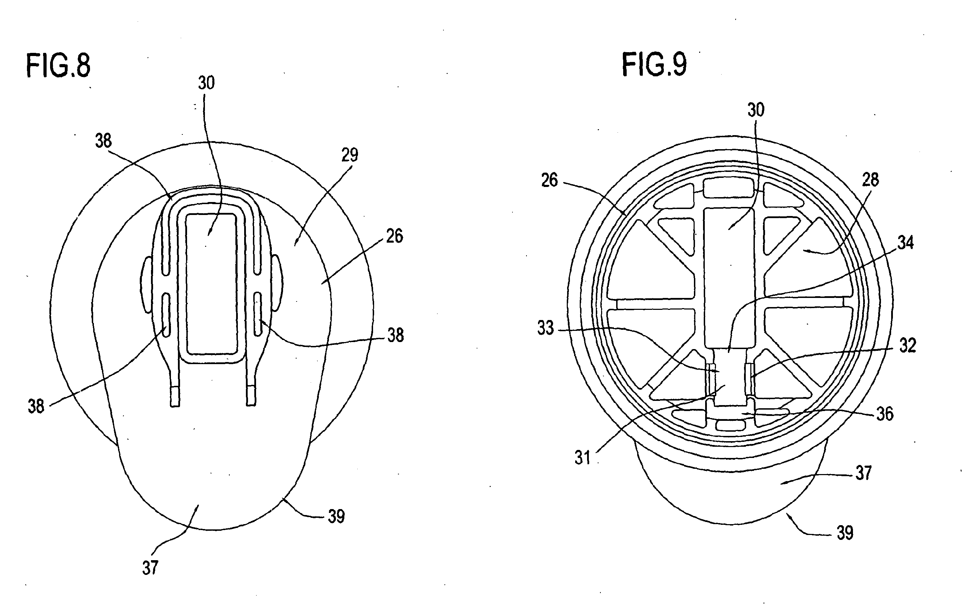

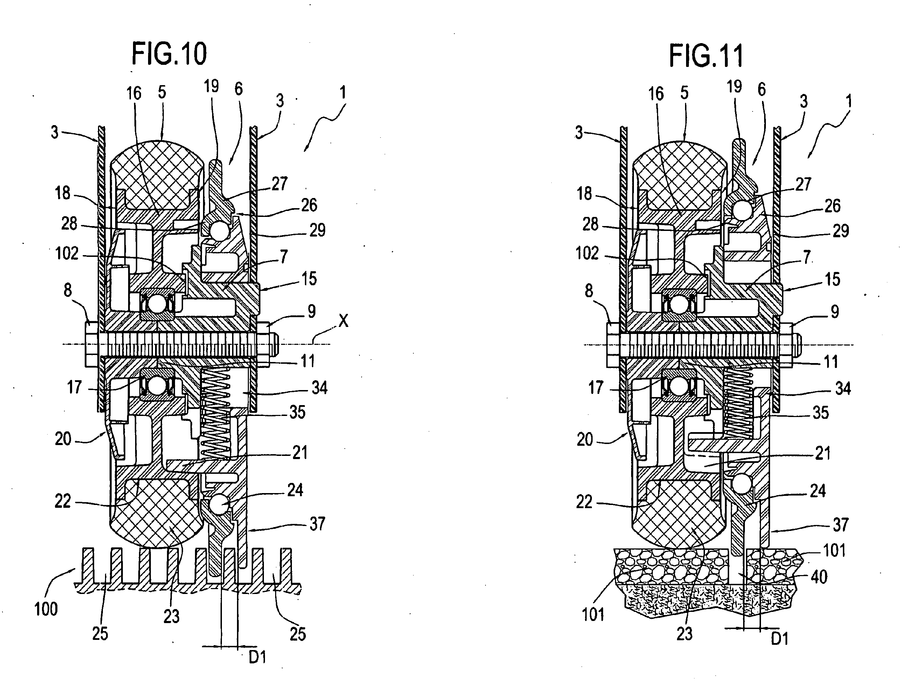

More specifically, the central disc 26 is movable between a raised position, illustrated in Figure 2, and a lowered operating position, illustrated in Figure 10, through a plurality of intermediate positions, one of which is illustrated in Figure 11. As shown Figure 9, the central disc 26 comprises, on the inside face 28, under the slot 30, a seat 31 defined by two lateral walls 32, 33 and a front wall 34, designed to contain a spring 35.

As may be seen in Figure 2, the spring 35 is located inside the seat 31 under and opposing the parallelepiped shaped element 13 protruding from the hub 7 and inserted in the slot 30.

Thus, the spring 35 exerts a downward force on the central disc 26 and tends to move it to the lowered wheel locked position.

The spring 35 constitutes elastic means acting on the auxiliary wheel 6 in such a way as to urge the auxiliary wheel 6 into the lowered, locked operating position.

The inside face 28 of the central disc 26 comprises a pawl 36 extending from the inside face 28 towards the inside face 19 of the internal disc 16 of the main wheel 5 and designed to engage one of the seats 21 of the inside face 19 of the internal disc 16 of the main wheel 5.

More specifically, the central disc 26 is free to move vertically relative to the main wheel 5 between a first, non-operating raised position, through a plurality of non-operating, intermediate positions, where the pawl 36 does not engage any of the seats 21, and the above mentioned lowered, operating position in which the pawl 36 engages one of the seats 21, as shown in Figure 10.

At any of the raised positions, the main wheel 5 is free to rotate relative to the central disc 26 of the auxiliary wheel 6, the central disc 26 being, on the other hand, fixed to the fork 2.

At the lowered, operating position, the pawl 36 of the central disc 26 of the auxiliary wheel 6 is engaged with one of the seats 21 on the inside face 19 of the main wheel 5, the main wheel 5 thus being locked relative to the central disc 26 of the auxiliary wheel 6.

The parallelepiped shaped element 13 protruding from the hub 7 and inserted in the slot 30 of the central disc 26 prevents the central disc 26 from rotating relative to the fork 2.

The only degree of freedom of the disc 26, therefore, is vertical translational movement relative to the hub 7.

As shown in Figures 1, 2, 8, 9, 10, 11, the outside face 29 of the central disc 26 of the auxiliary wheel 6 comprises a protrusion 37 for stopping the vertical translational movement of the disc 26 and auxiliary wheel 6.

The protrusion 37 extends in a plane P1 parallel to the auxiliary wheel 6 and is located at a predetermined distance D1 from the auxiliary wheel 6 itself.

Further, as shown in Figures 1 and 2, the protrusion is raised relative to the auxiliary wheel 6, with reference to the plane defined by the floor so that, when the auxiliary wheel 6 is in contact with the floor 101, the protrusion 37 is, instead, raised off the floor.

The protrusion 37 is made of a plastic material.

The protrusion 37 is designed to keep the auxiliary wheel 6 in one of the raised, non-operating positions until the trolley is pushed onto the inclined conveyor 100.

As explained in more detail below, when the trolley is on the conveyor 100, the protrusion 37 enables the central disc 26 to move into the lowered operating position where the main wheel 5 is locked in the longitudinal grooves 25.

Advantageously, as shown in Figure 8, the outside face 29 of the central disc 26 comprises a plurality of channels 38 made at the rectangular slot 30, designed to prevent dirt from accumulating at the slot 30 itself.

The protrusion 37 constitutes means 39 for controlling the auxiliary wheel 6 designed to keep the auxiliary wheel 6 in one of the raised, non-operating positions until the trolley is off the conveyor 100.

When the trolley is positioned on the conveyor 100, the control means 39 enable the auxiliary wheel 6 to move into the lowered operating position inside one of the grooves 25.

In use, when the trolley is pushed along a level floor 101, the floor 101 exerts on the auxiliary wheel 6 an upwardly directed force in reaction to the weight of the trolley itself.

The reaction force exerted by the floor 101 is sufficient to overcome the downwardly directed pushing force exerted by the spring 35 and tending to keep the auxiliary wheel 6 in the lowered operating position where the auxiliary wheel 6 itself is locked.

Thus, when the trolley is on the floor 101, the auxiliary wheel 6 remains in the first, non-operating raised position in contact with the floor 101 together with the main wheel 5.

The pawl 36 of the central disc 26 of the auxiliary wheel 6 is not engaged with any of the seats 21 on the internal disc 16 of the main wheel 5 and the main wheel 5 is thus free to revolve together with the crown ring 24 of the auxiliary wheel 6, thus allowing the trolley to move freely.

Under these conditions, the protrusion 37 connected to the central disc 26 is not, however, in contact with the floor 101 since it is, advantageously, raised relative to the crown ring 24.

As illustrated in Figure 10, when a trolley castor 1 is moved onto the conveyor and the auxiliary wheel 6 moves over one of the grooves 25 of the conveyor 100, the auxiliary wheel 6 is no longer subjected to the reaction force of the floor 101 and the spring 35, opposed by the hub 7, pushes the central disc 26 of the auxiliary wheel 6 downwards to the second, operating lowered position.

The crown ring 24 of the auxiliary wheel 6 sinks into the groove 25 and the pawl 36 of the central disc 26 engages one of the seats 21 on the internal disc 16 of the main wheel 5.

At the same time, the protrusion 37 fixed to the central disc 26, being parallel to the crown 24 and at a distance D1 from the latter, sinks into another groove 25 of the conveyor 100, causing the auxiliary wheel 6 to move down to the second operating lowered position.

Thus, the main wheel 5 is locked relative to the central disc 26 of the auxiliary wheel 6.

The distance D1 is calculated in such a way that when the crown ring 24 of the auxiliary wheel 6 sinks into one groove 25, the protrusion 37 sinks into an adjacent groove.

More specifically, the distance D1 is a whole multiple of the distance between two adjacent grooves 25.

The central disc 26 is fixed to the lateral arms 3 of the trolley fork 2 by means of the bolt 8 and cylindrical protuberance 15 of the parallelepiped shaped element 13 on the hub 7.

When the trolley castor 1 moves off the conveyor 100, the crown ring 24 gradually moves out of the respective conveyor groove 25 and the floor 101 exerts on the auxiliary wheel 6 an upwardly directed force tat moves it back to the first, raised non-operating position, thereby disengaging the pawl 36 from the seat 21 on the internal disc 16 of the main wheel 5 and enabling the main wheel 5 to start rotating again.

As illustrated in Figure 11, if one of the auxiliary wheels 6 unexpectedly sinks into a crack or groove 40 separating adjacent parts of the floor 101 while the trolley is being pushed along the floor, the wheel 6 is no longer subjected to the reaction force of the floor opposing the force of the spring 35 and would thus tend to sink into the groove 40 and move into the second, lowered operating position, bringing the main wheel 5, and hence the trolley, to a sudden stop.

Instead, as clearly illustrated in Figure 11, as the crown ring 24 of the auxiliary wheel 6 starts sinking into the groove 40, the auxiliary wheel 6 moves from the first raised position into one of the intermediate raised positions but does not reach the second, lowered operating position.

That is because when the auxiliary wheel 6 starts sinking into the groove 40, the protrusion 37 of the central disc 26 comes into contact with the portion of the floor 101 adjacent the groove 40, thus preventing the auxiliary wheel 6 from sinking further and stopping.

Thanks to the protrusion 37, therefore, the main wheel 5 of the trolley continues rotating and the trolley does not come to a sudden stop.

In a second possible embodiment, illustrated in Figures 3 and 4, the control means 39 comprise, instead of the protrusion 37, a second crown ring 41 parallel to the first crown ring 24, located at a distance D2 from the latter and mounted, together with the first crown ring 24, on the central disc 26 of the auxiliary wheel, with an interposed ball crown ring 27.

The distance D2 is such that when the auxiliary wheel 6 is in the lowered position, inside one of the grooves 25 of the conveyor 100, the second crown ring 41 is inside another groove 25 of the conveyor 100.

In a third embodiment that is not illustrated, the control means comprise a supporting wheel rotatably mounted on the central disc of the auxiliary wheel. The supporting wheel is located at a predetermined distance from the auxiliary wheel.

This distance is such that when the auxiliary wheel is in the lowered position, inside one of the grooves of the conveyor, the supporting wheel is inside another groove of the conveyor.

## Claims

1. A self-braking castor applicable to the lateral arms (3) of forks (2) of transport trolleys, in particular shopping trolleys, comprising:
- a main running wheel (5) that revolves about a defined axis (X); and
- an auxiliary wheel (6) mounted substantially beside the main wheel (5) and designed to be inserted into longitudinal grooves (25) of passenger conveyors; the auxiliary wheel (6) being movable vertically in a plane (P) perpendicular to the axis (X) of revolution of the main wheel (5), between a first, non-operating raised position through a plurality of non-operating, intermediate positions, in which the auxiliary wheel (6) allows the main wheel (5) to revolve, and a lowered operating position in which the auxiliary wheel (6) is inside one of the longitudinal grooves (25) and prevents the main wheel (5) from revolving; the castor being **characterized in that** it comprises means (39) for controlling the auxiliary wheel (6) and designed to keep the auxiliary wheel (6) at least in one of the intermediate non-operating positions until the trolley is off the conveyor (100); the control means (39) enabling the auxiliary wheel (6) to move into the lowered operating position inside one of the grooves (25) when the trolley is positioned on the conveyor (100).

2. The castor according to claim 1, **characterized in that** the auxiliary wheel (6) comprises a crown ring (24) rotatably mounted on a central disc (26) designed to engage with the main wheel (5) and having an inside face (28) facing the main wheel (5) and an outside face (29) facing an arm (3) of the trolley fork (2), the disc (26) being movable vertically between a plurality of non-operating, raised positions where it allows the main wheel (5) to revolve and a lowered operating position where it engages with the main wheel (5) and prevents the main wheel (5) from revolving, and **in that** the control means (39) comprise a protrusion (37) for stopping the vertical translational movement of the disc (26) and crown ring (24), the protrusion (37) being fixed to the central disc (26) and being located at a predetermined distance (D1) from the crown ring (24), the distance (D1) being such that when the auxiliary wheel (6) is in the lowered position inside one of the grooves (25) of the conveyor (100), the protrusion (37) is inside another groove (25) of the conveyor (100).

3. The castor according to claim 2, **characterized in that** the protrusion (37) is substantially parallel to the crown ring (24).

4. The castor according to claim 1, **characterized in that** the auxiliary wheel (6) comprises a crown ring (24) rotatably mounted on a central disc (26) designed to engage with the main wheel (5) and having an inside face (28) facing the main wheel (5) and an outside face (29) facing an arm (3) of the trolley fork (2), the disc (26) being movable vertically between a plurality of non-operating, raised positions where it allows the main wheel (5) to revolve and a lowered operating position where it engages with the main wheel (5) and prevents the main wheel (5) from revolving, and **in that** the control means (39) comprise a second crown ring (41) integral with the first crown ring (24) and mounted rotatably relative to the central disc (26), the second crown ring (41) being located at a predetermined distance (D2) from the first crown ring (24) such that when the auxiliary crown ring (24) is in the lowered position inside one of the grooves (25) of the conveyor (100), the second crown ring (41) is inside another groove (25) of the conveyor (100).

5. The castor according to claim 1, **characterized in that** the auxiliary wheel (6) is rotatably mounted on a central disc (26) designed to engage with the main wheel (5) and having an inside face (28) facing the main wheel (5) and an outside face (29) facing an arm (3) of the trolley fork (2), the disc (26) being movable vertically between a plurality of non-operating, raised positions where it allows the main wheel (5) to revolve and a lowered operating position where it prevents the main wheel (5) from revolving, and **in that** the control means (39) comprise a supporting wheel mounted rotatably on the central disc, the supporting wheel being parallel to the auxiliary wheel and being located at a predetermined distance from the auxiliary wheel (6), said distance being such that when the auxiliary wheel (6) is in the lowered position inside one of the grooves (25) of the conveyor (100), the supporting wheel is inside another groove (25) of the conveyor (100).

6. The castor according to any of the foregoing claims from 2 to 5, **characterized in that** the central disc (26) comprises a pawl (36) extending from the inside face (28) and designed to engage with matching seats (21) on the main wheel (5) when the disc (26) and the auxiliary wheel (6) are in the lowered operating position in such a way that the main wheel (5) is locked relative to the disc (26).

7. The castor according to claim 6, **characterized in that** it comprises a hub (7) connecting the main wheel (5) to the lateral arms (3) of the fork (2), the wheel (5) being able to freely rotate relative to the hub (7), said hub (7) comprising a substantially rectangular protruding element (13) that can be connected to the central disc (26) of the auxiliary wheel (6).

8. The castor according to claim 7, **characterized in that** the element (13) protruding from the hub (7) comprises a portion that is designed to be fixed to the fork (2).

9. The castor according to claim 8, **characterized in that** the central disc (26) comprises a substantially rectangular slot (30) in which the protruding element (13) of the hub (7) is inserted, said slot (30) being designed to make the disc (26) slide vertically relative to the hub (7) and to lock the rotation of the disc (26) relative to the hub (7).

10. The castor according to claim 9, **characterized in that** the central disc (26) comprises a spring (35) located in the slot (30), the spring (35) exerting a force on the protruding element (13) of the hub in such a way that the spring (35) tends to keep the disc (26) in the second, lowered operating position.

11. The castor according to claim 10, **characterized in that** the inside face (28) of the central disc (26) comprises a seat (31) defined by two lateral walls (32, 33) and one front wall (34), said seat (31) being designed to stably receive the spring (35).

12. The castor according to any of the foregoing claims from 2 to 9, **characterized in that** the outside face (29) of the central disc (26) comprises a plurality of channels (38) made at the rectangular slot (30), designed to prevent dirt from accumulating at the slot (30) itself.

## Patentansprüche

1. Selbstbremsende Rolle zur Anbringung an den Seitenarmen (3) von Gabeln (2) von Transportwagen, insbesondere Einkaufswagen, bestehend aus:
- einem Hauptlaufrad (5), das sich um eine vorgegebene Achse (X) dreht; und
- einem Hilfsrad (6), das im Wesentlichen neben dem Hauptrad (5) angebracht ist und dafür ausgelegt ist, in Längsrillen (25) von Fahrsteigen eingeführt zu werden; wobei das Hilfsrad (6) vertikal auf einer Ebene (P), die perpendikular zur Drehachse (X) des Hauptrades (5) ausgerichtet ist, beweglich ist zwischen einer ersten, angehobenen Außerbetriebsstellung, über mehrere zwischenliegende Außerbetriebsstellungen, in denen das Hilfsrad (6) das Drehen des Hauptrades (5) zulässt, und einer abgesenkten Betriebsstellung, in der sich das Hilfsrad (6) in einer der Längsrillen (25) befindet und das Drehen des Hauptrades (5) verhindert; wobei die Rolle **dadurch gekennzeichnet ist, dass** sie Mittel (39) zur Steuerung des Hilfsrades (6) beinhaltet, die dazu dienen, das Hilfsrad (6) zumindest in einer der zwischenliegenden Außerbetriebsstellungen zu halten, so lange der Wagen nicht auf dem Fahrsteig (100) ist; wobei die Steuerungsmittel (39) es dem Hilfsrad (6) ermöglichen, sich in die abgesenkte Betriebsstellung in eine der Rillen (25) zu bewegen, wenn der Transportwagen auf dem Fahrsteig (100) abgestellt wird.

2. Rolle nach Anspruch 1, **dadurch gekennzeichnet, dass** das Hilfsrad (6) einen Kreisring (24) beinhaltet, der drehbar auf einer mittleren Scheibe (26) montiert ist, die dazu dient, in Eingriff mit dem Hauptrad (5) zu treten und die eine Innenfläche (28) aufweist, die dem Hauptrad (5) zugewandt ist, und eine Außenfläche (29) aufweist, die einem Arm (3) der Gabel (2) des Wagens zugewandt ist, wobei die Scheibe (26) vertikal beweglich ist zwischen mehreren angehobenen Außerbetriebsstellungen, in denen sie das Drehen des Hauptrades (5) zulässt, und einer abgesenkten Betriebsstellung, in der sie in Eingriff mit dem Hauptrad (5) steht und das Drehen des Hauptrades (5) verhindert, und **dadurch**, dass die Steuerungsmittel (39) einen Vorsprung (37) zum Anhalten der vertikalen Translationsbewegung der Scheibe (26) und des Kreisrings (24) beinhalten, wobei der Vorsprung (37) an der mittleren Scheibe (26) befestigt ist und in einem vorbestimmten Abstand (D1) vom Kreisring (24) angeordnet ist, wobei der Abstand (D1) so gewählt ist, dass sich, wenn sich das Hilfsrad (6) in der abgesenkten Stellung in einer der Rillen (25) des Fahrsteiges (100) befindet, der Vorsprung (37) innerhalb einer anderen Rille (25) des Fahrsteiges (100) befindet.

3. Rolle nach Anspruch 2, **dadurch gekennzeichnet, dass** der Vorsprung (37) im Wesentlichen parallel zu dem Kreisring (24) ist.

4. Rolle nach Anspruch 1, **dadurch gekennzeichnet, dass** das Hilfsrad (6) einen Kreisring (24) beinhaltet, der drehbar auf einer mittleren Scheibe (26) montiert ist, die dazu dient, in Eingriff mit dem Hauptrad (5) zu treten und die eine Innenfläche (28) aufweist, die dem Hauptrad (5) zugewandt ist, und eine Außenfläche (29) aufweist, die einem Arm (3) der Gabel (2) des Wagens zugewandt ist, wobei die Scheibe (26) vertikal beweglich ist zwischen mehreren angehobenen Außerbetriebsstellungen, in denen sie das Drehen des Hauptrades (5) zulässt, und einer abgesenkten Betriebsstellung, in der sie in Eingriff mit dem Hauptrad (5) steht und das Drehen des Hauptrades (5) verhindert, und **dadurch**, dass die Steuerungsmittel (39) einen zweiten Kreisring (41) beinhalten, der fest mit dem ersten Kreisring (24) verbunden und relativ zu der mittleren Scheibe (26) drehbar montiert ist, wobei der zweite Kreisring (41) in einem vorbestimmten Abstand (D2) vom ersten Kreisring (24) derart angeordnet ist, dass sich, wenn sich der Hilfs-Kreisring (24) in der abgesenkten Stellung in einer der Rillen (25) des Fahrsteiges (100) befindet, der zweite Kreisring (41) in einer anderen Rille (25) des Fahrsteiges (100) befindet.

5. Rolle nach Anspruch 1, **dadurch gekennzeichnet, dass** das Hilfsrad (6) drehbar auf einer mittleren Scheibe (26) montiert ist, die dazu dient, in Eingriff mit dem Hauptrad (5) zu treten und die eine Innenfläche (28) aufweist, die dem Hauptrad (5) zugewandt ist, und eine Außenfläche (29) aufweist, die einem Arm (3) der Gabel (2) des Wagens zugewandt ist, wobei die Scheibe (26) vertikal beweglich ist zwischen mehreren angehobenen Außerbetriebsstellungen, in denen sie das Drehen des Hauptrades (5) zulässt, und einer abgesenkten Betriebsstellung, in der sie das Drehen des Hauptrades (5) verhindert, und **dadurch**, dass die Steuerungsmittel (39) ein Stützrad beinhalten, das drehbar auf der mittleren Scheibe montiert ist, wobei das Stützrad parallel zu dem Hilfsrad und in einem vorbestimmten Abstand vom Hilfsrad (6) angeordnet ist, wobei dieser Abstand so gewählt ist, dass sich, wenn sich das Hilfsrad (6) in der abgesenkten Stellung in einer der Rillen (25) des Fahrsteiges (100) befindet, das Stützrad innerhalb einer anderen Rille (25) des Fahrsteiges (100) befindet.

6. Rolle nach einem der vorhergehenden Ansprüche von 2 bis 5, **dadurch gekennzeichnet, dass** die mittlere Scheibe (26) eine Sperrklinke (36) beinhaltet, die von der Innenfläche (28) hervorragt und dazu vorgesehen ist, in passende Aufnahmen (21) auf dem Hauptrad (5) einzugreifen, wenn sich die Scheibe (26) und das Hilfsrad (6) in der abgesenkten Betriebsstellung befinden, so dass das Hauptrad (5) relativ zu der Scheibe (26) gesperrt ist.

7. Rolle nach Anspruch 6, **dadurch gekennzeichnet, dass** sie eine Nabe (7) beinhaltet, die das Hauptrad (5) mit den Seitenarmen (3) der Gabel (2) verbindet, wobei sich das Rad (5) relativ zu der Nabe (7) frei drehen kann und die Nabe (7) ein im Wesentlichen rechteckiges, hervorstehendes Element (13) beinhaltet, das mit der mittleren Scheibe (26) des Hilfsrades (6) verbunden werden kann.

8. Rolle nach Anspruch 7, **dadurch gekennzeichnet, dass** das von der Nabe (7) hervorstehende Element (13) einen Abschnitt beinhaltet, der dazu bestimmt ist, an der Gabel (2) befestigt zu werden.

9. Rolle nach Anspruch 8, **dadurch gekennzeichnet, dass** die mittlere Scheibe (26) einen im Wesentlichen rechteckigen Schlitz (30) aufweist, in den das hervorstehende Element (13) der Nabe (7) eingeführt wird, wobei der Schlitz (30) so ausgeführt ist, dass er das vertikale Verschieben der Scheibe (26) relativ zur Nabe (7) und die Sperrung des Drehens der Scheibe (26) relativ zur Nabe (7) bewirkt.

10. Rolle nach Anspruch 9, **dadurch gekennzeichnet, dass** die mittlere Scheibe (26) eine Feder (35) beinhaltet, die in dem Schlitz (30) angeordnet ist, wobei die Feder (35) eine Kraft auf das hervorstehende Element (13) der Nabe ausübt, so dass die Feder (35) bestrebt ist, die Scheibe (26) in der zweiten, abgesenkten Betriebsstellung zu halten.

11. Rolle nach Anspruch 10, **dadurch gekennzeichnet, dass** die Innenfläche (28) der mittleren Scheibe (26) eine Aufnahme (31) beinhaltet, die durch zwei Seitenwände (32, 33) und eine Vorderwand (34) gebildet wird, wobei die Aufnahme (31) dafür ausgelegt ist, die Feder (35) stabil aufzunehmen.

12. Rolle nach einem der vorhergehenden Ansprüche von 2 bis 9, **dadurch gekennzeichnet, dass** die Außenfläche (29) der mittleren Scheibe (26) mehrere Kanäle (38) beinhaltet, die an dem rechteckigen Schlitz (30) angefertigt sind und dazu dienen, Schmutzansammlungen an dem Schlitz (30) vorzubeugen.

## Revendications

1. Une roulette autofreinée applicable sur les bras latéraux (3) de fourches (2) de chariots de transport, en particulier de chariots à provisions, comprenant :
- une roue principale (5) de roulement qui tourne autour d'un axe (X) défini ; et
- une roue auxiliaire (6) essentiellement accolée à la roue principale (5) et destinée à être insérée dans des rainures longitudinales (25) de tapis roulants ; la roue auxiliaire (6) étant mobile verticalement, dans un plan (P) perpendiculaire à l'axe (X) de rotation de la roue principale (5), entre une première position non opérationnelle soulevée en passant par une pluralité de positions non opérationnelles intermédiaires dans lesquelles la roue auxiliaire (6) permet la rotation de la roue principale (5), et une position opérationnelle abaissée dans laquelle la roue auxiliaire (6) est insérée dans une des rainures longitudinales (25) et empêche la rotation de la roue principale (5) ; la roulette étant **caractérisée en ce qu'**elle comprend des moyens (39) servant à commander la roue auxiliaire (6) et destinés à maintenir ladite roue auxiliaire (6) au moins dans une des positions non opérationnelles intermédiaires jusqu'à ce que le chariot soit en dehors du tapis (100) ; lesdits moyens de commande (39) permettant à la roue auxiliaire (6) de venir se placer dans la position opérationnelle abaissée, à l'intérieur de l'une des rainures (25), quand le chariot est placé sur le tapis (100).

2. La roulette selon la revendication 1, **caractérisée en ce que** la roue auxiliaire (6) comprend une couronne circulaire (24) montée de façon rotative sur un disque central (26) destiné à venir en prise avec la roue principale (5) et ayant une face intérieure (28) orientée vers la roue principale (5) et une face extérieure (29) orientée vers un bras (3) de la fourche (2) du chariot, ledit disque (26) étant mobile verticalement entre une pluralité de positions non opérationnelles soulevées, dans lesquelles il permet la rotation de la roue principale (5), et une position opérationnelle abaissée dans laquelle il vient en prise avec la roue principale (5) et empêche la rotation de la roue principale (5), et **en ce que** les moyens de commande (39) comprennent un appendice (37) destiné à arrêter le mouvement de translation vertical du disque (26) et de la couronne circulaire (24), ledit appendice (37) étant fixé au disque central (26) et étant situé à une distance (D1) prédéfinie de la couronne circulaire (24), la distance (D1) étant telle que, lorsque la roue auxiliaire (6) est dans la position abaissée à l'intérieur de l'une des rainures (25) du tapis (100), l'appendice (37) est à l'intérieur d'une autre rainure (25) du tapis (100).

3. La roulette selon la revendication 2, **caractérisée en ce que** l'appendice (37) est essentiellement parallèle à la couronne circulaire (24).

4. La roulette selon la revendication 1, **caractérisée en ce que** la roue auxiliaire (6) comprend une couronne circulaire (24) montée de façon rotative sur un disque central (26) destiné à venir en prise avec la roue principale (5) et ayant une face intérieure (28) orientée vers la roue principale (5) et une face extérieure (29) orientée vers un bras (3) de la fourche (2) du chariot, ledit disque (26) étant mobile verticalement entre une pluralité de positions non opérationnelles soulevées, dans lesquelles il permet la rotation de la roue principale (5), et une position opérationnelle abaissée dans laquelle il vient en prise avec la roue principale (5) et empêche la rotation de la roue principale (5), et **en ce que** les moyens de commande (39) comprennent une deuxième couronne circulaire (41) solidaire de la première couronne circulaire (24) et montée de façon rotative par rapport au disque central (26), ladite deuxième couronne circulaire (41) étant située à une distance (D2) prédéfinie de la première couronne circulaire (24) de manière à ce que, lorsque la couronne circulaire (24) auxiliaire est dans la position opérationnelle abaissée à l'intérieur de l'une des rainures (25) du tapis (100), la deuxième couronne circulaire (41) soit à l'intérieur d'une autre rainure (25) du tapis (100).

5. La roulette selon la revendication 1, **caractérisée en ce que** la roue auxiliaire (6) est montée de façon rotative sur un disque central (26) destiné à venir en prise avec la roue principale (5) et ayant une face intérieure (28) orientée vers la roue principale (5) et une face extérieure (29) orientée vers un bras (3) de la fourche (2) du chariot, ledit disque (26) étant mobile verticalement entre une pluralité de positions non opérationnelles soulevées, dans lesquelles il permet la rotation de la roue principale (5), et une position opérationnelle abaissée dans laquelle il empêche la rotation de la roue principale (5), et **en ce que** les moyens de commande (39) comprennent une roue d'appui montée de façon rotative sur le disque central, ladite roue d'appui étant parallèle à la roue auxiliaire et étant située à une distance prédéfinie de cette même roue auxiliaire (6), ladite distance étant telle que, lorsque la roue auxiliaire (6) est dans la position abaissée à l'intérieur de l'une des rainures (25) du tapis (100), ladite roue d'appui est à l'intérieur d'une autre rainure (25) du tapis (100).

6. La roulette selon l'une quelconque des revendications précédentes de 2 à 5, **caractérisée en ce que** le disque central (26) comprend un cliquet (36) saillant de la face intérieure (28) et destiné à venir en prise avec des logements (21) correspondants réalisés sur la roue principale (5) lorsque le disque (26) et la roue auxiliaire (6) sont dans la position opérationnelle abaissée, de manière à ce que la roue principale (5) soit bloquée par rapport audit disque (26).

7. La roulette selon la revendication 6, **caractérisée en ce qu'**elle comprend un moyeu (7) reliant la roue principale (5) aux bras latéraux (3) de la fourche (2), la roue (5) pouvant librement tourner par rapport au moyeu (7), ledit moyeu (7) comprenant un élément saillant (13), essentiellement rectangulaire, qui peut être associé au disque central (26) de la roue auxiliaire (6).

8. La roulette selon la revendication 7, **caractérisée en ce que** l'élément (13) saillant du moyeu (7) comprend une partie qui est destinée à être fixée à la fourche (2).

9. La roulette selon la revendication 8, **caractérisée en ce que** le disque central (26) comprend une fente (30) essentiellement rectangulaire dans laquelle est inséré l'élément saillant (13) du moyeu (7), ladite fente (30) étant destinée à faire coulisser verticalement le disque (26) par rapport au moyeu (7) et à bloquer la rotation dudit disque (26) par rapport audit moyeu (7).

10. La roulette selon la revendication 9, **caractérisée en ce que** le disque central (26) comprend un ressort (35) situé dans la fente (30), ledit ressort (35) exerçant une force sur l'élément saillant (13) du moyeu de manière à ce que le ressort (35) lui-même ait tendance à maintenir le disque (26) dans la deuxième position opérationnelle abaissée.

11. La roulette selon la revendication 10, **caractérisée en ce que** la face intérieure (28) du disque central (26) comprend un logement (31) défini par deux parois latérales (32, 33) et une paroi avant (34), ledit logement (31) étant destiné à recevoir de façon stable le ressort (35).

12. La roulette selon l'une quelconque des revendications précédentes de 2 à 9, **caractérisée en ce que** la face extérieure (29) du disque central (26) comprend une pluralité de canaux (38) réalisés au niveau de la fente rectangulaire (30) et destinés à empêcher la saleté de s'accumuler au niveau de la fente (30) elle-même.
